# EUROPEAN PATENT APPLICATION

(11) **EP 4 737 044 A1**
(43) Date of publication of application: **06.05.2026**
(21) Application number: 25212684.2
(22) Date of filing: 31.10.2025
(51) Int. Cl.: B23K 9/12, B23K 9/133, B65H 59/04

(54) **WELDING WIRE FEEDERS HAVING A WIRE SPOOL BRAKE RELEASE**

(30) Priority: 31.10.2024 US 202463714498 P; 29.10.2025 US 202519373022
(71) Applicant: Illinois Tool Works Inc., Glenview IL 60025 (US)
(72) Inventor: HONG, Yue, Glenview, 60025 (US); CHRISTOPHER, Mark Richard, Glenview, 60025 (US); NIEMANN, Caitlin Marie, Glenview, 60025 (US); UITENBROEK, Connor, Glenview, 60025 (US); SCHWARTZ, Valarie, Glenview, 60025 (US); BROWN, Erik Robert, Glenview, 60025 (US); ROSE, Bailey, Glenview, 60025 (US); FINK, Joe, Glenview, 60025 (US)
(74) Representative: HGF

(57) **Abstract**

The present application relates to a welding wire feeder including: a spool hub (44, 45) configured to hold a wire spool (40), a wire drive (46,50) configured to feed wire (80) from the wire spool (40); a spool brake configured to selectively resist rotation of the wire spool (40) and control circuitry (22) configured to: control the spool brake to resist the rotation of the wire spool (40) while the wire drive (46, 50) is not feeding the wire (80) from the wire spool (40), and in response to an operator input, control the spool brake to reduce resistance to the rotation of the wire spool (40) and control the wire drive (46, 50) to not feed the wire (80) from the wire spool (40).

## Description

### FIELD OF THE DISCLOSURE

The present application claims the benefit of U.S. Provisional Patent Application Serial No. 63/714,498, filed October 31, 2024, entitled "WIRE FEEDERS HAVING A WIRE SPOOL BRAKE RELEASE." The entirety of U.S. Provisional Patent Application Serial No. 63/714,498 is expressly incorporated herein by reference.

### FIELD OF THE DISCLOSURE

This disclosure relates generally to welding-type wire feeders and, more particularly, to wire feeders having a wire spool brake release.

### BACKGROUND

In some welding-type applications, a welding wire feeder may be used to feed welding wire from a wire spool to a welding torch for a welding operation. Because wire spools carry a finite quantity of wire, a wire spool must be replaced when the wire from the wire spool has been consumed. The process of replacing a wire spool typically involves feeding the wire from the wire spool to a welding-type torch after replacement prior to resuming welding-type operations.

### SUMMARY

Wire feeders having a wire spool brake release are disclosed, substantially as illustrated by and described in connection with at least one of the figures, as set forth more completely in the claims.

### DRAWINGS

FIG. 1 illustrates a welding-type system including a wire feeder and a wire feeder source, in accordance with aspects of this disclosure.
FIG. 2 illustrates an example system including another implementation of the wire feeder and wire feeder source of the welding-type system of FIG. 1.
FIG. 3 illustrates another example welding-type system in which elements of the wire feeder and elements of the wire source of FIG. 1 are combined or integrated with elements of the power supply into a single enclosure.
FIG. 4 is a flowchart representative of example machine readable instructions which may be performed to implement the welding-type system, wire feeder, power supply, and/or wire source of FIGS. 1-3 to control a spool brake.

The figures are not necessarily to scale. Where appropriate, similar or identical reference numbers are used to refer to similar or identical components.

### DETAILED DESCRIPTION

In some welding-type operations, such as gas metal arc welding (GMAW), flux cored arc welding (FCAW), and submerged arc welding (SAW), welding wire is fed by a wire feeder to a torch for a welding operation. In some applications, the wire is supplied via a spool, which pays out the wire to the wire feeder during feeding. In some conventional wire feeders, the wire spool is coupled to a braking system or other rotational resistance to compensate for a low resting tension of the motor or other actuator driving the wire feeder. The braking system reduces or prevents over-spooling of the wire (e.g., wire jump) that can cause feeding problems. While the braking system reduces or prevents over-spooling of the wire, the rotational resistance on the wire spool requires the operator to exert substantial force on the wire spool to manually feed the wire and/or reel in the wire.

Disclosed example wire feeders and welding-type systems include a wire spool brake that can be disengaged or otherwise released by a brake release input (e.g., separate from a welding operation input such as a welding torch trigger or wire jog input). While the wire feeder or welding-type system is in an idle or non-welding state, the wire spool brake is engaged to reduce or prevent rotation of the spool by tension and/or internal forces on the spooled wire. In response to the brake release input, the example wire feeder or welding-type system controls the wire spool brake to reduce or remove the resistance to rotation, thereby allowing the operator to manually rotate the wire spool more easily to pay out and/or respool the wire.

In some examples, the wire spool brake is controlled to reduce or remove the resistance for a predetermined period, after which the wire spool brake is controlled to reengage the wire spool to increase the resistance. The operator may repeatedly use the brake release input after that wire spool brake is reengaged, and/or the operator may use the brake release input multiple times to increment the predetermined period. In some examples, wire spool brake is reengaged during the predetermined period in response to predefined operator inputs (e.g., a torch trigger press, a jog command, etc.) or in response to any operator input.

In some examples, the brake release input is a button or other input device, which may be located within a housing of the wire feeder or welding-type system. For example, the brake release input may be positioned so as to be accessible when the wire spool is accessible to the operator, and covered when the wire spool is covered or inaccessible to the operator. In other examples, the brake release input may be located on a user interface with other operator controls, and/or may be received via a communication with a remote control device, such as a remote pendant or communicatively connected computing device (e.g., a smartphone).

Disclosed example wire feeders and welding-type systems reduce the force or effort required by the operator to manually manipulate the wire spool during maintenance. For example, in some applications, an operator may be required to replace the wire spool and/or perform torch maintenance several times per day. Disclosed example wire feeders and welding-type systems improve the ease and speed with which each maintenance activity involving rotation of the wire spool is performed.

According to aspects of this disclosure, example welding wire feeders include: a spool hub configured to hold a wire spool; a wire drive configured to feed wire from the wire spool; a spool brake configured to selectively resist rotation of the wire spool; and control circuitry configured to: control the spool brake to resist the rotation of the wire spool while the wire drive is not feeding the wire from the wire spool; and in response to an operator input, control the spool brake to reduce resistance to the rotation of the wire spool and control the wire drive to not feed the wire from the wire spool.

In some example welding wire feeders, wherein the control circuitry is configured to control the spool brake to reduce the resistance to the rotation of the wire spool for a predetermined duration in response to the operator input. In some example welding wire feeders, the control circuitry is configured to, in response to a second operator input during the predetermined duration, control the spool brake to resume the resistance to the rotation of the wire spool. Some example welding wire feeders further include an input device configured to receive the operator input. Some example welding wire feeders further include a housing, in which the spool hub, the wire drive, the spool brake, the control circuitry, and the input device are located within the housing.

In some example welding wire feeders, the control circuitry is configured to control the spool brake to reduce the resistance to the rotation of the wire spool by disengaging the spool brake from the wire spool. In some example welding wire feeders, the spool brake includes an electrically controlled spool brake configured to engage a lateral surface of at least one of the wire spool, the spool hub, or a spindle coupled to the spool hub, with a force configured to increase the resistance to the rotation of the wire spool. In some example welding wire feeders, the spool brake includes an electromagnetic spool brake. In some example welding wire feeders, the control circuitry is configured to, in response to receiving an input signal indicative of a welding operation, control the spool brake to reduce the resistance to the rotation of the wire spool. Some example welding wire feeders further include communication circuitry configured to receive a signal representative of the operator input.

According to other aspects of this disclosure, example welding wire feeders include: a spool hub configured to hold a wire spool; a wire drive configured to feed wire from the wire spool; a spool brake configured to selectively resist rotation of the wire spool; and control circuitry configured to: control the spool brake to resist the rotation of the wire spool when the wire drive is not feeding wire from the wire spool; and in response to an operator input, control the spool brake to reduce resistance to the rotation of the wire spool for a predetermined duration.

In some example welding wire feeders, the control circuitry is configured to control the spool brake to reduce the resistance to the rotation of the wire spool further in response to determining that the wire drive is not feeding wire from the wire spool. In some example welding wire feeders, the control circuitry is configured to, in response to a second operator input during the predetermined duration, control the spool brake to resume the resistance to the rotation of the wire spool. In some example welding wire feeders, the operator input comprises an input device. Some example welding wire feeders further include a housing, wherein the spool hub, the wire drive, the spool brake, the control circuitry, and the input device are located within the housing.

In some example welding wire feeders, the control circuitry is configured to control the spool brake to reduce the resistance to the rotation of the wire spool by disengaging the spool brake from the wire spool. In some example welding wire feeders, the spool brake includes an electrically controlled spool brake configured to engage a lateral surface of at least one of the wire spool, the spool hub, or a spindle coupled to the spool hub, with a force configured to increase the resistance to the rotation of the wire spool. In some example welding wire feeders, the spool brake includes an electromagnetic spool brake.

In some example welding wire feeders, the control circuitry is configured to, in response to receiving an input signal indicative of a welding operation, control the spool brake to reduce the resistance to the rotation of the wire spool. Some example welding wire feeders further include communication circuitry configured to receive a signal representative of the operator input.

The term "welding-type system," as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit" and "control circuitry," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards, that form part or all of a controller, and are used to control a welding process, a device such as a power source or wire feeder, motion, automation, monitoring, air filtration, displays, and/or any other type of welding-related system.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), flash memory, solid state storage, a computer-readable medium, or the like.

As used herein, the term "torch," "welding torch," "welding tool" or "welding-type tool" refers to a device configured to be manipulated to perform a welding-related task, and can include a hand-held welding torch, robotic welding torch, gun, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), submerged arc welding (SAW), spray, short circuit, and/or any other type of welding process.

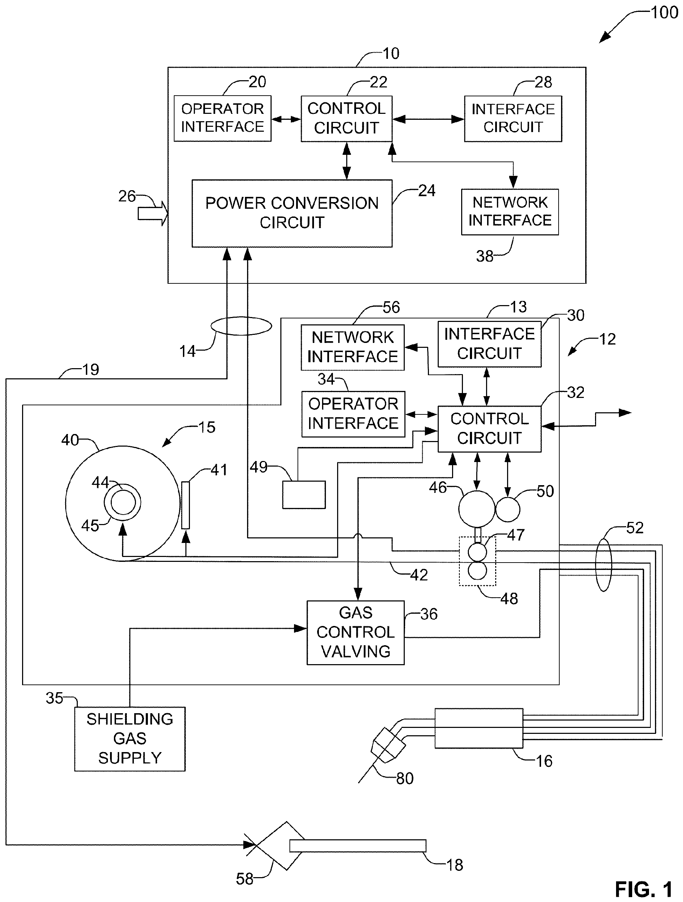

FIG. 1 illustrates an example welding system 100 for performing welding-type operations. As shown in the welding system 100 of FIG. 1, a power supply 10 and a wire feeder 12 are coupled via conductors or conduits 14. In the illustrated example, the power supply 10 is separate from the wire feeder 12, such that the wire feeder 12 may be positioned near a welding location at some distance from the power supply 10. Terminals are typically provided on the power supply 10 and on the wire feeder 12 to allow the conductors 14 or conduits to be coupled to the systems so as to allow for power and gas to be provided to the wire feeder 12 from the power supply 10, and to allow data to be exchanged between the two devices.

The system 100 is configured to provide wire from a welding wire source 15, power from the power supply 10, and shielding gas from a shielding gas supply 35, to a welding torch 16. The torch 16 may be any type of arc welding torch, (e.g., GMAW, GTAW, FCAW, SMAW, SAW) and may allow for the feed of a welding wire 42 (e.g., an electrode wire) and gas to a location adjacent to a workpiece 18. A work cable 19 is run to the welding workpiece 18 so as to complete an electrical circuit between the power supply 10 and the workpiece 18.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the example system 100 is configured to allow for welding with various steels, aluminums, or other welding wire that is channeled through the torch 16. Further, the system 100 is configured to employ welding wires with a variety of wire sizes. These weld settings are communicated to a control circuitry 22 within the power supply 10. The system may be particularly adapted to implement welding regimes configured for certain electrode types.

The control circuitry 22 controls generation of welding power output that is supplied to the welding wire 42 for carrying out the desired welding operation.

The torch 16 applies power from the power supply 10 to the wire electrode 42, such as via a welding cable 52. Similarly, shielding gas from a shielding gas supply 35 is fed through the wire feeder 12 and the welding cable 52. During welding operations, the welding wire 42 is advanced through a jacket of the welding cable 52 towards the torch 16.

The work cable 19 and clamp 58 allow for closing an electrical circuit from the power supply 10 through the welding torch 16, the electrode (wire) 42, and the workpiece 18 for maintaining the welding arc during the operation.

The control circuitry 22 is coupled to a power conversion circuit 24. This power conversion circuit 24 is adapted to convert a source of input power 26 to output welding-type power, such as pulsed waveforms applied to the welding wire 42 at the torch 16. Various power conversion circuits may be employed, including choppers, boost circuitry, buck circuitry, inverters, converters, and/or other switched mode power supply circuitry, and/or any other type of power conversion circuitry. The input power 26 applied to the power conversion circuit 24 may originate in the power grid (mains power), although other sources of power may also be used, such as power generated by an engine-driven generator, batteries, fuel cells or other alternative sources. The power supply 10 illustrated in FIG. 1 may also include an interface circuit 28 configured to allow the control circuitry 22 to exchange signals with the wire feeder 12.

The wire feeder 12 includes a complementary interface circuitry 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both. Additionally or alternatively, the interface circuitry 30 and the interface circuit 28 may communicate wirelessly and/or via the weld cable.

The wire feeder 12 also includes control circuit 32 coupled to the interface circuitry 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuit 32 may also be coupled to gas control valving 36 which regulates and measures the flow of shielding gas from the shielding gas supply 35 to the torch 16. In general, such gas is provided at the time of welding, and may be turned on immediately preceding the weld and for a short time following the weld. The shielding gas supply 35 may be provided in the form of pressurized bottles, supply lines, and/or any other type of portable or fixed gas supply.

The wire feeder 12 includes components for feeding wire to the welding torch 16 and thereby to the welding operation, under the control of control circuit 32. As illustrated, the drive components and control components of the wire feeder 12 are included within a wire feeder housing 13 (e.g., an enclosure). A wire spool is mounted on a spool hub 44.

Welding wire 42 is unspooled from the spool 40 and is progressively fed to the torch 16. The spool 40 may be associated with a brake 45 that disengages the spool 40 when wire is to be fed from the spool 40 to the torch 16. The brake 45 may also be regulated, for example by the control circuit 32, to maintain a predetermined rotational resistance level (e.g., friction) to avoid free spinning of the spool 40. The example brake 45 may be an electromagnetic brake, a magnetic brake, and/or any other type of brake that may be controlled by the control circuit 32 to engage, disengage, and/or adjust rotational resistance of the spool 40, the spool hub 44, and/or a spindle coupled to the spool hub 44. The first wire feeder motor 46 may be provided within a housing 48 that engages with wire feed rollers 47 to push wire from the wire feeder 12 towards the torch 16.

In practice, at least one of the rollers 47 is mechanically coupled to the motor 46 and is rotated by the motor 46 to drive the wire from the wire feeder 12, while the mating roller is biased towards the wire to apply adequate pressure by the two rollers to the wire. Some systems may include multiple rollers of this type. In some examples, the wire feeder 12 is configured to feed 1/8 inch wire. In some examples, the wire feeder 12 is configured to feed 3/32 inch wire.

A tachometer 50 or other sensor may be provided for detecting the speed of the first wire feeder motor 46, the rollers 47, or any other associated component so as to provide an indication of the actual wire feed speed. Signals from the tachometer 50 are fed back to the control circuit 32 such that the control circuit 32 can track the length of wire that has been fed. The length of wire may be used directly to calculate consumption of the wire and/or the length may be converted to wire weight based on the type of wire and its diameter.

When a spool 40 is installed, an operator may input information about the spool 40, for example via the operator interface 34. The control circuit 32 may receive this information and determine an initial amount of wire able to be fed from the spool 40, for example by weight or by length of wire. For example, the operator may input a spool serial number, and the control circuit 32 may determine a weight or length of wire by looking up the spool type in memory of the control circuit 32 or in an external database. In some examples, the user may input weight or wire length information and/or wire type information into the operator interface 34. The control circuit 32 can then track consumption of the wire, for example based on signals received from the tachometer 50.

The control circuit 32 may control the operator interface 34 to indicate when an amount of wire remaining in the spool 40 is less than a threshold amount. An operator may then be aware that the spool 40 should be replaced soon. In some examples, the operator interface 34 may display an amount of wire (e.g., by weight or length) remaining in the spool. In some examples, the control circuit 32 may send a command to stop or disable a welding operation when an amount of wire remaining in the spool 40 is less than a threshold amount.

In some examples, the wire source 15 includes a sensor 41 to determine an amount of wire remaining in the spool 40. For example, the sensor 41 may be a scale to measure the weight of the wire spool 40. Signals from the sensor 41 are fed back to the control circuit 32 such that the control circuit 32 can track a consumption of welding wire by weight. As described above, the operator interface 34 may display an amount of wire remaining in the spool 40 (e.g., by weight or length) and/or indicate when an amount of wire remaining in the spool 40 is less than a threshold amount. In some examples, the control circuit 32 may send a command to stop or disable a welding operation when an amount of wire remaining in the spool 40 is less than a threshold amount. In some examples, rather than a scale, the sensor 41 may be a light sensor which measures approximately how much wire is left in the spool. In some examples, a light sensor may determine when an amount of wire remaining on the spool is less than a threshold amount. In some examples, multiple light sensors may be used to determine when the amount of wire remaining is at various threshold amounts.

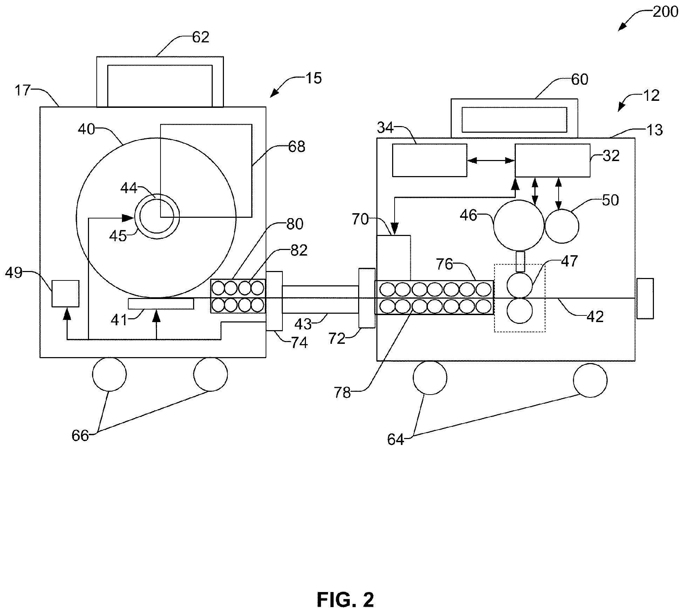

FIG. 2 illustrates an example system 200 including another implementation of the wire feeder 12 and wire feeder source 15 of the welding-type system 100 of FIG. 1. In the example of FIG. 2, the wire source 15 is physically independent from the wire feeder 12. In other words, as explained in more detail below, the wire source 15 is connectable to and disconnectable from the wire feeder 12, and the wire source 15 can be physically moved independently from the wire feeder 12.

An inlet 72 of the wire feeder 12 is connected to an outlet 74 of the wire source 15 via one or more connectors 43. In some examples, the wire feeder inlet 72 is directly connected to the wire source outlet 74. For example, the wire feeder inlet 72 may include a first connector that directly connects to a second connector of the wire source outlet 74. For example, the wire feeder inlet 72 may connect to the wire source outlet 74 via quick disconnect connectors or the like through which wire from the spool 40 may be fed. Suitable example quick disconnects are sold by Wire Wizard. In some examples, a conduit may connect the wire feeder inlet 72 to the wire source outlet 74. In some examples, the conduit is flexible (e.g., similar to a weld cable). In some examples the conduit may be a rigid conduit. The connectors 43 enable welding wire 42 from the spool 40 to be fed to the drive components of the wire feeder 12. The connectors 43 may also enable one or more control cables to be connected from components within the wire source enclosure 17 to the control circuit 32.

Each of the wire feeder housing 13 and the wire source housing 17 may include a handle (60 and 62 respectively) and a plurality of wheels (64 and 66, respectively). The wheels (64 and 66) may include braking or locking mechanisms (e.g., one or more wheels may be locking casters).

The wire source housing 17 may include a viewing window 68. The viewing window may be made of a transparent or translucent material such than an operator can view the wire spool 40 when the housing 17 is closed. As an operator can view the spool 40 through the window 68, an operator is able to view the amount of wire remaining on the spool 40.

In some examples, the wire feeder 12 may include a sensor 70 which detects when a wire source 15 is connected to the wire feeder 12. For example, the sensor 70 may be a radio frequency identification ("RFID") reader which reach a RFID tag on the spool 40 or the wire source housing 17. The sensor 70 may receive information about the spool, for example a wire type, wire length, or wire weight. The information is sent to the control circuit 32. The control circuit 32 may track a consumption of the spool 40 based on the initial information received from the sensor 70 and/or monitoring use of the wire. The control circuit 32 may adjust one or more settings of the wire feeder 12 based on the wire type information. The control circuit 32 may also transmit the received wire type information to the power supply 10 (e.g., via the interface circuitry 30). The control circuitry 22 of the power supply 10 may then adjust one or more settings of the power supply 10 based on the received wire type. In some examples, the control circuit 32 of the wire feeder 12 or the control circuitry 22 of the power supply 10 may determine whether a selected welding process or selected weld settings are compatible with the received wire type. In some examples, the operator interface (20 or 34) may indicate that the received wire type is not compatible with the selected welding process or selected weld settings. Other possible wireless technologies that the sensor 70 may use include Bluetooth, Bluetooth low energy, near field communication, ZigBee, RuBee, or the like.

As illustrated, the wire feeder 12 includes a wire guide 76 connected to the inlet 72 of the wire feeder 12. The wire guide 76 guides wire received at the inlet 72 to the drive roll(s) 47. In some examples, the wire guide 76 may include a plurality of ball bearings 78. The wire source 15 also includes a wire guide 80. The wire guide 80 is configured to guide wire from the spool 40 to the outlet 74. In some examples, the wire guide 80 may include a plurality of ball bearings 82. In some examples, the wire guides (76 and 80) are configured to guide 1/8 inch wire. In some examples, the wire guides (76 and 80) are configured to guide 3/32 inch wire.

As the wire source 15 is connectable to the wire feeder 12, a new wire source 15 can be connected to the wire feeder 12 when the wire from the spool 40 is spent, or if a maintenance issue occurs with the wire source 15. For example, when the spool 40 is spent, an operator may disconnect the wire source 15 from the wire feeder 12 (e.g., disconnect the quick disconnect connector) and connect a new wire source 15 to the wire feeder 12. Connecting a new wire source 15 to the feeder may include manually feeding wire from the spool 40 through the connector 43, the inlet 72, and the wire guide 76 to the feed rollers 47 of the wire feeder 12. Additionally, an operator may place a new wire spool 40 in the wire source 15 when an old wire spool 40 is spent. To replace a spool 40 in the wire source 15, an operator manually feeds wire from the new spool 40 through the wire guide 80 and the outlet 74.

In some examples, an operator may have multiple wire sources 15, and can quickly replace one wire source with another when the wire spool 40 is spent. In some examples, the wire source housings 17 are stackable (e.g., multiple housings 17 can be stacked on top of each other), thereby minimizing space taken up by the multiple wire sources. In some examples, an operator can quickly switch from one wire source to another wire source (e.g., disconnect one wire source 15 from the wire feeder 12 and connect a different wire source 15). In some examples, the wire spool 40 may be locked in place on the hub 44. For example, the spool brake 45 may be biased to apply resistance to the spool hub 44 to prevent the spool 40 from spinning on the hub (e.g., which may occur without a locking mechanism when the wire source 15 is moved).

In some examples, different wire sources 15 may include different wire types (e.g., wire size or material). For example, an operator may have two or more wire sources 15, each with a different wire type. Various welding operations may require the use of a different wire type. For example, one operation may require 1/8 inch wire while a second operation may require 3/32 inch wire. An operator may connect the wire source 15 including the appropriate wire type for the particular operation to the wire feeder 12. Then, when the operator performs a different second welding operation that requires a different wire type, the operator can disconnect the first wire source 15 from the wire feeder and connect a second wire source 15 to the wire feeder 12 that includes the appropriate wire type for the second welding operation.

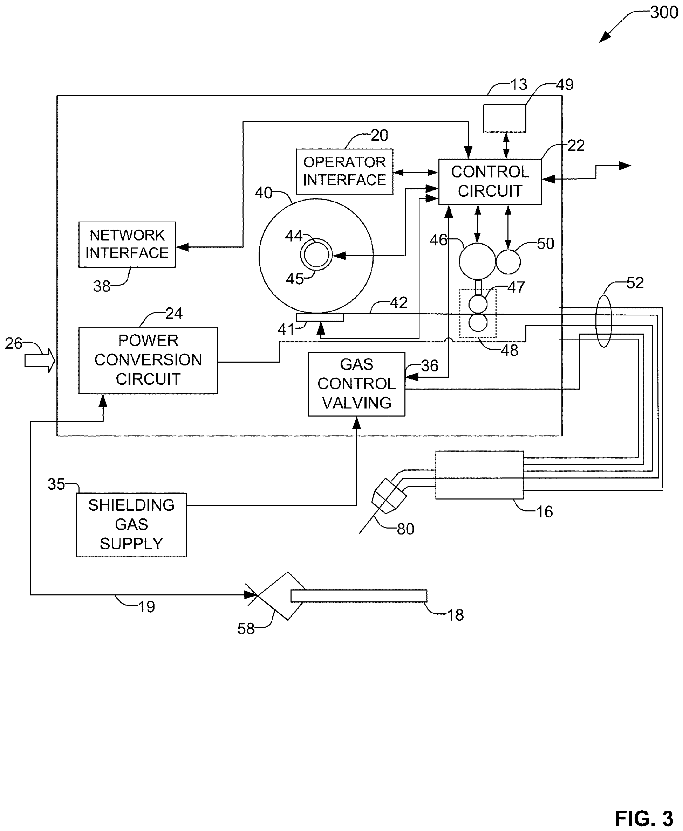

FIG. 3 illustrates another example welding-type system 300 in which elements of the wire feeder 12 and elements of the wire source 15 are combined or integrated with elements of the power supply 10 into a single enclosure 13. For example, the power conversion circuit 24, the control circuitry 22, the operator interface 20, the network interface 38, the wire spool hub 44, the spool brake 45, the wire feeder motor 46, the rollers 47, and/or the gas control valving 36 may be implemented in a single housing.

In any of the example systems 100, 200, 300 of FIGS. 1-3, the spool brake 45 is engaged during idle (e.g., non-welding) periods to reduce or prevent unspooling of the wire from the spool 40. When the spool brake 45 is engaged, the spool 40 may be manually turned by an operator with significant effort.

To enable the operator to more easily and quickly rotate the spool 40, such as for feeding of wire from the spool 40 and/or reeling wire back onto the spool 40, the example wire feeders, wire sources, and/or power supplies of FIGS. 1, 2, and 3 include a spool brake release input 49. The example spool brake release input 49 may be a button or other discrete input device. For example, the spool brake release input 49 may be positioned proximate to the wire spool40, such that the spool brake release input 49 is accessible to the operator when the wire spool 40 is accessible (e.g., uncovered), and is covered or otherwise inaccessible when the wire spool 40 is covered or inaccessible.

In other examples, the spool brake release input 49 may be implemented on the operator interface 20, such as a software button on a touchscreen, or a button or other physical input device. In still other examples, the spool brake release input 49 may be received by the control circuitry 22 from a remote control device (e.g., a smartphone, a remote pendant, etc.) via the network interface 38.

In response to activation of the spool brake release input 49 by the operator, the example control circuitry 22 controls the spool brake 45 to reduce resistance to the rotation of the wire spool hub 44 and the wire spool 40. For example, if the spool brake 45 is an electromagnetic brake, the example control circuitry 22 may actuate the spool brake 45 to disengage from the spool hub 44. Because the brake release does not involve feeding of wire by the wire feeder 12, the example control circuitry 22 further controls the wire feeder motor 46 not to feed the wire 42 from the wire spool 40.

The example control circuitry 22 may control the spool brake 45 to reduce the resistance for a predetermined period of time (e.g., 1 minute, 2 minutes, etc.) in response to the spool brake release input 49, after which the control circuitry 22 may control the spool brake 45 to reengage the spool hub 44 to resume the resistance to the rotation of the wire spool 40. The operator may then repeat the spool brake release input 49 to cause the control circuitry 22 to repeat the disengagement of the spool brake 45 for another predetermined period of time.

In some other examples, the control circuitry 22 may increment a timer by a predetermined amount of time in response to each selection of the spool brake release input 49. For example, if the spool brake release input 49 causes the control circuitry 22 to disengage the spool brake 45 for one minute, the operator may activate the spool brake release input 49 twice in succession to cause the control circuitry 22 to disengage the spool brake 45 for two minutes, three times in succession to cause the control circuitry 22 to disengage the spool brake 45 for three minutes, and so on. In such examples, each activation of the spool brake release input 49 increments the spool brake release timer by a predetermined time (e.g., one minute). Accordingly, if the operator activates the spool brake release input 49 to set one minute on the timer, a later activation of the spool brake release input 49 with 30 seconds left on the timer will add one minute to the timer for a total of 1 minute, 30 seconds on the timer.

In still other examples, activating the spool brake release input 49 may reset the timer value to the predetermined time. For example, if the predetermined time interval is one minute and the operator activates the spool brake release input 49 with 30 seconds left on the timer, the timer will reset to the one minute interval and continue running. When the timer reaches zero, the control circuitry 22 may control the spool brake 45 to reengage the spool hub 44 to resume the resistance to the rotation of the wire spool 40.

During the predetermined period while the spool brake 45 is controlled to reduce the resistance, the control circuitry 22 may monitor for one or more operator inputs, such as a torch trigger, a jog button, a spool brake engagement input, or any other predetermined input(s). In response to receiving the operator inputs, the example control circuitry 22 controls the spool brake 45 to resume (e.g., restore, increase) the resistance to rotation of the wire spool 40 and the spool hub 44. In some examples, the spool brake release input 49 may operate as a spool brake release toggle, which causes the control circuitry 22 to switch between reducing and increasing the resistance to rotation (e.g., between engaging and disengaging the spool brake 45).

The control circuitry 22 may control the spool brake 45 to disengage the spool hub 44 substantially completely (e.g., to minimize resistance to the extent practicable) or may control the spool brake 45 to partially reduce the resistance to rotation of the spool hub 44. Disengaging the spool brake 45 refers to a complete or partial reduction in resistance to rotation, such as a reduction in friction or reduction in electromagnetic force applied to the spool hub 44 or the spool 40 by the brake 45. For example, the spool brake 45 may be configured to be engaged by being pressed into contact with the spool hub 44 and/or the spool 40 to apply a friction force, and disengaged by being removed from contact or applying a reduced force to the spool hub 44 and/or the spool 40.

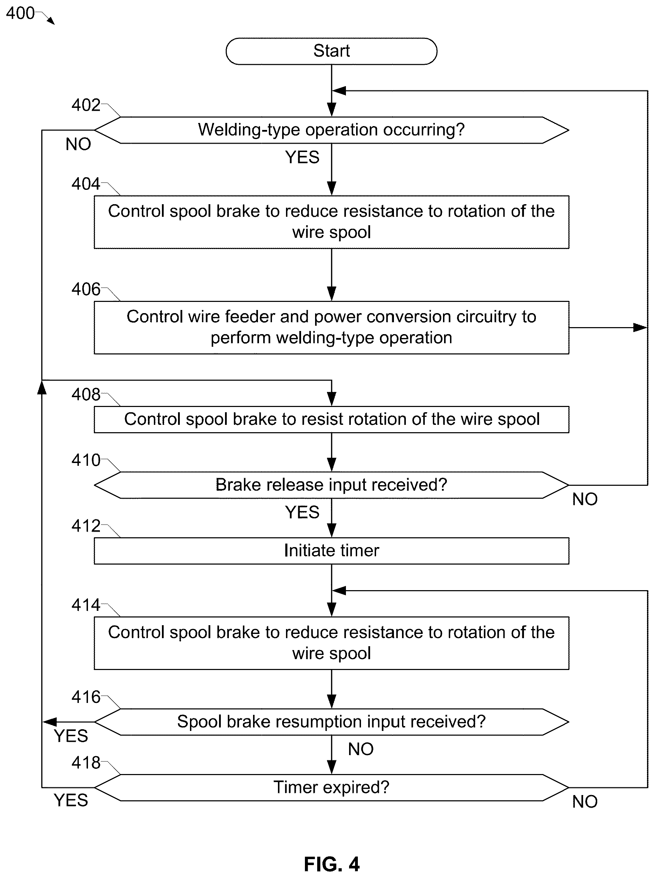

FIG. 4 is a flowchart representative of example machine readable instructions 400 which may be performed to implement the welding-type system 100, 200, 300, wire feeder 12, power supply 10, and/or wire source 15 of FIGS. 1-3 to control a spool brake 45. For example, the instructions 400 may be performed by the control circuitry 22 of FIGS. 1-3.

At block 402, the control circuitry 22 determines whether a welding-type operation is occurring. For example, the control circuitry 22 may determine whether a torch trigger is active to control the welding system 100, 200, 300 to perform welding, involving feeding wire 42 from the wire spool 40 to the welding torch 16.

If a welding-type operation is occurring (block 402), at block 404 the control circuitry 22 controls the spool brake 45 to reduce the resistance to rotation of the wire spool40. For example, the control circuitry 22 may control the spool brake 45 to disengage from the spool hub 44 or the wire spool 40 to reduce or remove rotational resistance. In examples in which the spool brake 45 is biased toward engagement, the control circuitry 22 may actuate the spool brake 45 to actively move the spool brake 45 out of engagement with the wire spool 40. Conversely, in examples in which the spool brake 45 is biased away from engagement, the control circuitry 22 may de-actuate the spool brake 45 to allow the biasing device (e.g., a spring) to disengage the spool brake 45 from the wire spool 40.

At block 406, the control circuitry 22 controls the wire feeder 12 (e.g., the wire feeder motor 46) and the power conversion circuit 24 to perform the welding-type operation. For example, the control circuitry 22 controls the power conversion circuit 24 to convert the input power 26 to welding-type output power. The power conversion circuit 24 outputs the welding-type power and the wire feeder 12 outputs the welding wire 42 to the welding torch 16 to perform a wire-fed welding operation. Control then returns to block 402 to determine whether the welding-type operation is continuing.

If a welding-type operation is not occurring (block 402), at block 408 the control circuitry 22 controls the spool brake 45 to resist rotation of the wire spool 40. For example, the control circuitry 22 may control the spool brake 45 to engage the spool hub 44 or the wire spool 40 to increase rotational resistance. In examples in which the spool brake 45 is biased toward engagement (e.g., via a spring), the control circuitry 22 may de-actuate the spool brake 45 to engage. Conversely, in examples in which the spool brake 45 is biased away from engagement, the control circuitry 22 may actuate the spool brake 45 to disengage. The control circuitry 22 may control the spool brake 45 during an idle (e.g., non-welding) mode to increase resistance to rotation of the wire spool to reduce or prevent wire jump or spontaneous unspooling of the wire 42 from the spool 40.

At block 410, the control circuitry 22 determines whether a brake release input is received. For example, the control circuitry 22 may determine whether the spool brake release input 49 is received. If the brake release input is received (block 410), at block 412 the control circuitry 22 initiates a timer. For example, the control circuitry 22 may set a timer to a predetermined period for which the spool brake 45 is to be released (e.g., one minute, two minutes, etc.), and starts running of the timer. In some examples, the time period is configurable by the operator.

At block 414, the control circuitry 22 controls the spool brake 45 to reduce resistance to rotation of the wire spool 40. Block 414 may be implemented in a similar or identical manner to block 404 described above.

At block 416, the control circuitry 22 determines whether a spool brake resumption input has been received. For example, the spool brake resumption input may include a torch trigger or jog button, or any other predetermined types of inputs, which cause the control circuitry 22 to override the remaining timer and increase the resistance applied by the spool brake 45. If the spool brake resumption input has not been received (block 416), at block 418 the control circuitry 22 determines whether the timer has expired. If the timer has not expired (block 418), control returns to block 414 to continue controlling the spool brake 45 to have a reduced resistance.

If the timer has expired (block 418), or if the spool brake resumption input has been received (block 416), control returns to block 408 to control the spool brake 45 to resist the rotation of the wire spool.

While disclosed examples are described above with reference to one wire spool, one wire spool brake, and one spool brake release input, other examples may include multiple wire spools. In such examples, each wire spool may have an associated wire spool brake as described herein, or multiple wire spools may be braked with a single wire spool brake. Additionally, in examples having multiple wire spool brakes, each of the wire spool brakes may include a brake release input as disclosed herein, or a single brake release input may cause the control circuitry to disengage multiple wire spool brakes simultaneously.

The present methods and systems may be realized in hardware, software, and/or a combination of hardware and software. Example implementations include an application specific integrated circuit and/or a programmable control circuit. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding wire feeder, comprising:
   a spool hub configured to hold a wire spool;
   a wire drive configured to feed wire from the wire spool;
   a spool brake configured to selectively resist rotation of the wire spool; and
   control circuitry configured to:
      control the spool brake to resist the rotation of the wire spool while the wire drive is not feeding the wire from the wire spool; and
      in response to an operator input, control the spool brake to reduce resistance to the rotation of the wire spool and control the wire drive to not feed the wire from the wire spool.
Clause 2. The welding wire feeder as defined in clause 1, wherein the control circuitry is configured to control the spool brake to reduce the resistance to the rotation of the wire spool for a predetermined duration in response to the operator input.
Clause 3. The welding wire feeder as defined in clause 2, wherein the control circuitry is configured to, in response to a second operator input during the predetermined duration, control the spool brake to resume the resistance to the rotation of the wire spool.
Clause 4. The welding wire feeder as defined in clause 1, further comprising an input device configured to receive the operator input.
Clause 5. The welding wire feeder as defined in clause 4, further comprising a housing, wherein the spool hub, the wire drive, the spool brake, the control circuitry, and the input device are located within the housing.
Clause 6. The welding wire feeder as defined in clause 1, wherein the control circuitry is configured to control the spool brake to reduce the resistance to the rotation of the wire spool by disengaging the spool brake from the wire spool.
Clause 7. The welding wire feeder as defined in clause 1, wherein the spool brake comprises an electrically controlled spool brake configured to engage a lateral surface of at least one of the wire spool, the spool hub, or a spindle coupled to the spool hub, with a force configured to increase the resistance to the rotation of the wire spool.
Clause 8. The welding wire feeder as defined in clause 7, wherein the spool brake comprises an electromagnetic spool brake.
Clause 9. The welding wire feeder as defined in clause 1, wherein the control circuitry is configured to, in response to receiving an input signal indicative of a welding operation, control the spool brake to reduce the resistance to the rotation of the wire spool.
Clause 10. The welding wire feeder as defined in clause 1, further comprising communication circuitry configured to receive a signal representative of the operator input.
Clause 11. A welding wire feeder, comprising:
   a spool hub configured to hold a wire spool;
   a wire drive configured to feed wire from the wire spool;
   a spool brake configured to selectively resist rotation of the wire spool; and
   control circuitry configured to:
      control the spool brake to resist the rotation of the wire spool when the wire drive is not feeding wire from the wire spool; and
      in response to an operator input, control the spool brake to reduce resistance to the rotation of the wire spool for a predetermined duration.
Clause 12. The welding wire feeder as defined in clause 11, wherein the control circuitry is configured to control the spool brake to reduce the resistance to the rotation of the wire spool further in response to determining that the wire drive is not feeding wire from the wire spool.
Clause 13. The welding wire feeder as defined in clause 12, wherein the control circuitry is configured to, in response to a second operator input during the predetermined duration, control the spool brake to resume the resistance to the rotation of the wire spool.
Clause 14. The welding wire feeder as defined in clause 11, wherein the operator input comprises an input device.
Clause 15. The welding wire feeder as defined in clause 14, further comprising a housing, wherein the spool hub, the wire drive, the spool brake, the control circuitry, and the input device are located within the housing.
Clause 16. The welding wire feeder as defined in clause 11, wherein the control circuitry is configured to control the spool brake to reduce the resistance to the rotation of the wire spool by disengaging the spool brake from the wire spool.
Clause 17. The welding wire feeder as defined in clause 11, wherein the spool brake comprises an electrically controlled spool brake configured to engage a lateral surface of at least one of the wire spool, the spool hub, or a spindle coupled to the spool hub, with a force configured to increase the resistance to the rotation of the wire spool.
Clause 18. The welding wire feeder as defined in clause 17, wherein the spool brake comprises an electromagnetic spool brake.
Clause 19. The welding wire feeder as defined in clause 11, wherein the control circuitry is configured to, in response to receiving an input signal indicative of a welding operation, control the spool brake to reduce the resistance to the rotation of the wire spool.
Clause 20. The welding wire feeder as defined in clause 11, further comprising communication circuitry configured to receive a signal representative of the operator input.

## Claims

1. A welding wire feeder, comprising:
a spool hub configured to hold a wire spool;
a wire drive configured to feed wire from the wire spool;
a spool brake configured to selectively resist rotation of the wire spool; and
control circuitry configured to:
control the spool brake to resist the rotation of the wire spool while the wire drive is not feeding the wire from the wire spool; and
in response to an operator input, control the spool brake to reduce resistance to the rotation of the wire spool and control the wire drive to not feed the wire from the wire spool.

2. The welding wire feeder as defined in claim 1, wherein the control circuitry is configured to control the spool brake to reduce the resistance to the rotation of the wire spool for a predetermined duration in response to the operator input.

3. The welding wire feeder as defined in claim 2, wherein the control circuitry is configured to, in response to a second operator input during the predetermined duration, control the spool brake to resume the resistance to the rotation of the wire spool.

4. The welding wire feeder as defined in claim 1, further comprising an input device configured to receive the operator input.

5. The welding wire feeder as defined in claim 4, further comprising a housing, wherein the spool hub, the wire drive, the spool brake, the control circuitry, and the input device are located within the housing.

6. The welding wire feeder as defined in claim 1, wherein the control circuitry is configured to control the spool brake to reduce the resistance to the rotation of the wire spool by disengaging the spool brake from the wire spool.

7. The welding wire feeder as defined in claim 1, wherein the spool brake comprises an electrically controlled spool brake configured to engage a lateral surface of at least one of the wire spool, the spool hub, or a spindle coupled to the spool hub, with a force configured to increase the resistance to the rotation of the wire spool.

8. The welding wire feeder as defined in claim 7, wherein the spool brake comprises an electromagnetic spool brake.

9. The welding wire feeder as defined in claim 1, wherein the control circuitry is configured to, in response to receiving an input signal indicative of a welding operation, control the spool brake to reduce the resistance to the rotation of the wire spool or wherein the welding wire feeder further comprising communication circuitry configured to receive a signal representative of the operator input.

10. A welding wire feeder, comprising:
a spool hub configured to hold a wire spool;
a wire drive configured to feed wire from the wire spool;
a spool brake configured to selectively resist rotation of the wire spool; and
control circuitry configured to:
control the spool brake to resist the rotation of the wire spool when the wire drive is not feeding wire from the wire spool; and
in response to an operator input, control the spool brake to reduce resistance to the rotation of the wire spool for a predetermined duration.

11. The welding wire feeder as defined in claim 10, wherein the control circuitry is configured to control the spool brake to reduce the resistance to the rotation of the wire spool further in response to determining that the wire drive is not feeding wire from the wire spool, and optionally wherein the control circuitry is configured to, in response to a second operator input during the predetermined duration, control the spool brake to resume the resistance to the rotation of the wire spool.

12. The welding wire feeder as defined in claim 10, wherein the operator input comprises an input device, and optionally the welding wire feeder further comprising a housing, wherein the spool hub, the wire drive, the spool brake, the control circuitry, and the input device are located within the housing.

13. The welding wire feeder as defined in claim 10, wherein the control circuitry is configured to control the spool brake to reduce the resistance to the rotation of the wire spool by disengaging the spool brake from the wire spool.

14. The welding wire feeder as defined in claim 10, wherein the spool brake comprises an electrically controlled spool brake configured to engage a lateral surface of at least one of the wire spool, the spool hub, or a spindle coupled to the spool hub, with a force configured to increase the resistance to the rotation of the wire spool, and optionally wherein the spool brake comprises an electromagnetic spool brake.

15. The welding wire feeder as defined in claim 10, wherein the control circuitry is configured to, in response to receiving an input signal indicative of a welding operation, control the spool brake to reduce the resistance to the rotation of the wire spool or
wherein the welding wire feeder further comprising communication circuitry configured to receive a signal representative of the operator input.
